(19) Europäisches Patentamt / European Patent Office / Office européen des brevets

(11) **EP 3 893 454 B1**

(12) **EUROPEAN PATENT SPECIFICATION**

(45) Date of publication and mention
of the grant of the patent:
**19.03.2025 Bulletin 2025/12**

(21) Application number: **19893159.4**

(22) Date of filing: **22.10.2019**

(51) International Patent Classification (IPC):
*H04L 51/04* (2022.01)      *H04L 51/48* (2022.01)
*H04L 67/306* (2022.01)      *H04M 1/27453* (2020.01)
*H04L 9/40* (2022.01)

(52) Cooperative Patent Classification (CPC):
**H04M 1/27453; H04L 63/102; H04L 63/104;**
H04L 51/04; H04L 51/48; H04L 67/306

(86) International application number:
**PCT/CN2019/112597**

(87) International publication number:
**WO 2020/114125 (11.06.2020 Gazette 2020/24)**

(54) **AUTHENTICATION METHOD BASED ON CONTACT LIST, TERMINAL DEVICE, SERVER, AND STORAGE MEDIUM**

AUTHENTIFIZIERUNGSVERFAHREN AUF BASIS EINER KONTAKTLISTE, ENDGERÄTEVORRICHTUNG, SERVER UND SPEICHERMEDIUM

PROCÉDÉ D'AUTHENTIFICATION BASÉ SUR UNE LISTE DE CONTACTS, DISPOSITIF TERMINAL ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2018 CN 201811475484**

(43) Date of publication of application:
**13.10.2021 Bulletin 2021/41**

(73) Proprietor: ZTE Corporation
**Shenzhen, Guangdong 518057 (CN)**

(72) Inventors:
• **LIU, Jun**
  **Shenzhen, Guangdong 518057 (CN)**
• **QIAN, Chunxiao**
  **Shenzhen, Guangdong 518057 (CN)**
• **NIU, Ben**
  **Shenzhen, Guangdong 518057 (CN)**
• **WANG, Xianguang**
  **Shenzhen, Guangdong 518057 (CN)**
• **LIU, Chao**
  **Shenzhen, Guangdong 518057 (CN)**

(74) Representative: **Boult Wade Tennant LLP et al**
**Salisbury Square House**
**8 Salisbury Square**
**London EC4Y 8AP (GB)**

(56) References cited:
CN-A- 104 636 453    CN-A- 105 871 702
CN-A- 106 611 133    CN-A- 107 294 902
CN-A- 107 294 902    US-A1- 2015 215 304

## Description

### Field of the Invention

The present disclosure relates to the technical field of communications, and in particular, to an authentication method based on a contact list, a terminal device, a server, and a storage medium.

### Background of the Invention

At present, a lot of instant chat software is widely used, such as QQ, WeChat, etc. Instant chat software is network software that can transmit instant messages between two or more users. Most instant chat software can display a list of contacts, and some can also display whether a contact is online or not. Every sentence sent by the users will be instantly displayed on screens of both parties. Users can complete the establishment of contact relationships by accepting requests from other users. At the same time, a lot of instant chat software also introduces functions such as personal space and circle of friends, so that users can view status information released by contacts at any time. The promotion of the instant chat software enriches the interaction between people and has brought great convenience for people's Life.

However, the inventor has found at least the following problem in some situations: the risk of a received friend-adding request cannot be predicted, resulting in a relatively passive process of establishing the contact relationship, which in turn brings about hidden security risks and exacerbates the rampant network fraud.

CN107294902 describes a risk recognition method and a risk recognition device. The method comprises steps: modification information sent by a first user is received; when the modified user information of the first user contained in the modification information is determined to be different from the already-stored user information of the first user, the similarities between the user identifier of the first user after modification and user identifiers of other users in a user group are calculated respectively, and/or the similarities between the identifier picture of the first user after modification and identifier pictures of other users in the user group are calculated; and according to the similarities, whether the first user belongs to a risk user is recognized.

CN104636453 introduces an illegal user data identification method and device, and belongs to the technical field of data analysis. The illegal user data identification method includes the steps that a friend adding request is received, and the friend adding request includes applicant data; the similarity of the applicant data and friend data of all friends is computed; when at least one obtained similarity is larger than the preset threshold value, it is determined that the applicant data are illegal user data.

### Summary of the Invention

Accordingly, objects of the present disclosure are to provide an authentication method based on a contact list, a terminal device, a server, and a storage medium, which can actively predict the risk of a received friend-adding request, thereby improving security and effectively reducing network fraud. The invention is disclosed by the independent claims. Further embodiments are described by the dependent claims.

To achieve the aforementioned objects, embodiments of the present disclosure provide an authentication method based on a contact list, a terminal device, a server, and a storage medium.

### Brief Description of the Drawings

One or more embodiments are exemplified with reference to the corresponding figure in the accompanying drawings. These exemplified descriptions do not constitute a limitation on the embodiments. Like reference numbers in the drawings represent similar elements. Drawings and elements therein are not drawn to scale unless otherwise stated.

Fig. 1 is a flowchart of an authentication method based on a contact list provided according to a first embodiment of the present disclosure;

Fig. 2 is a flowchart of an authentication method based on a contact list provided according to a second embodiment of the present disclosure;

Fig. 3 is a flowchart of an authentication method based on a contact list provided according to a third embodiment of the present disclosure;

Fig. 4 is a flowchart of an authentication method based on a contact list provided according to a fourth embodiment of the present disclosure;

Fig. 5 schematically shows structural connection of a terminal device provided according to a fifth embodiment of the present disclosure; and

Fig. 6 schematically shows structural connection of a server provided according to a sixth embodiment of the present disclosure.

## Detailed Description of the Embodiments

In order to make the objectives, technical solutions, and advantages of the embodiments of the present disclosure more clear, various embodiments of the present disclosure will be described in detail below in conjunction with the accompanying drawings. However, those skilled in the art will understand that the following detailed description is provided to give the reader a better understanding of certain embodiments of the disclosure. Even without those technical details and various changes and modifications based on the following embodiments, the claimed solutions may also be realized.

A first embodiment of the present disclosure relates to an authentication method based on a contact list, which is applied to a terminal device. Feature attribute information of contacts in a contact list of a user is acquired. When it is detected that a third-party user requests adding the user as a friend, feature attribute information of the third-party user is acquired. Then, the feature attribute information of the third-party user is matched with the feature attribute information of each of the contacts in the contact list respectively, so as to actively predict the risk of a received friend-adding request. If a matching result of the feature attribute information of the third-party user and the feature attribute information of any contact in the contact list satisfies a preset condition, it indicates that the third-party user might perform network fraud by pretending to be a friend of this user. Accordingly, first prompt information is added in a request interface received by the user. Since the first prompt information can play a role of prompting the user to verify an identity of the third-party user, the user rashly recognizing the third-party user as the friend that the third-party user pretends to be can be avoided, so as to improve security and effectively reduce network fraud.

In existing technologies, a lot of instant chat software has hidden security risks in the process of establishing a contact relationship. For example, a fraudster may acquire visiting information of friends of a certain user by visiting the personal space of the user, and the visiting information includes messages, comments etc. left by the friends. Generally, the fraudster may acquire account information of a friend of this user only by clicking the head portrait or name of the friend of this user. Then, the fraudster fakes the head portrait or name of this user and sends a friend-adding request in the name of this user. Under the circumstance that the head portrait and the name of the fraudster are the same as those of the user, friends of this user generally would directly accept the adding request, which provides convenience for the fraudster to carry out fraudulent activities. Especially in the case that the user who is pretended to be may be on a business trip, travelling, etc., that user would not know this situation immediately, so that he/she cannot take relevant actions in time to warn his/her friends and thus fails to prevent occurrence of the fraud. There are many similar cases. In common network fraud tactics disclosed by the public security organs, such a tactic of pretending to be another person is also listed and described to warn citizens to take precautions.

This embodiment can solve the above problem that, in existing technologies, a lot of instant chat software fails to actively predict the risk of a received friend-adding request, therefore leading to hidden security risks. Implementation details of the authentication method based on the contact list will be described below. The following content relates to implementation details provided only for better understanding, and is not essential for implementing the present solution.

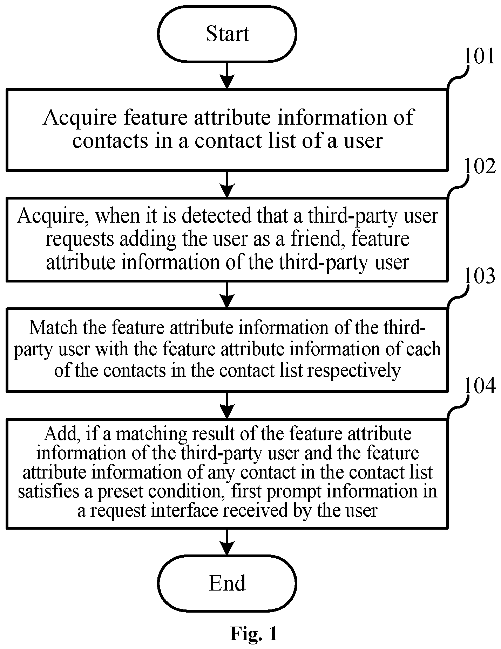

In the present embodiment, the authentication method based on the contact list is applied to a terminal device. The terminal device in the present embodiment may include, but is not limited to, a mobile phone, a computer, or the like. The flowchart is shown in Fig. 1, and includes the following steps.

At step 101, feature attribute information of contacts in a contact list of a user is acquired.

For example, if user A and user B are a contact of each other. A terminal device may acquire feature attribute information of the user B from a contact list of the user A. The terminal device may also acquire feature attribute information of the user A from a contact list of the user B.

The feature attribute information in the present embodiment may include any one of or any combination of name, head portrait picture, phone number, and email address, and may also include region, gender, or the like, which is not limited by the present embodiment. Since these pieces of feature attribute information may be combined in any combination, the problem that determining a fraud account is performed based on a single factor can be solved, and accuracy of predicting the risk can be further improved. Additionally, the feature attribute information of the contacts in the contact list of the user can be acquired and stored when the terminal device detects that the user registers an account of instant chat software or modifies the personal profile.

It is preferred that the feature attribute information of the contacts in the contact list of the user acquired is feature attribute information of all the contacts in the contact list. In this way, precision of a matching result can be improved. However, in practical applications, if there are too many contacts in the contact list of the user, in order to reduce memory usage of the terminal device by the feature attribute information of all the contacts in the contact list, the user may set a given number in the terminal device, so that the terminal device only acquires feature attribute information of a predetermined number of contacts in the contact list. For example, feature attribute information of 100 contacts in the contact list may be acquired according to the setting.

Preferably, the user may voluntarily select contacts in the contact list for the terminal device to acquire feature attribute information of the contacts selected by the user. Actually, among the contacts in the contact list of the user, the number of contacts who often contact the user is limited. Moreover, if a relatively unfamiliar contact sends a friend-adding request to the user, or if the relatively unfamiliar contact asks the user for money after the user accepts his/her friend-adding request, the user will generally be more alert. In addition, based on statistics, it is found that the fraudster normally pretends to be a relatively close friend of the user to carry out fraudulent activities. Accordingly, through voluntarily selecting contacts who often contact the user in the contact list by the user to enable the terminal device only to acquire feature attribute information of the contacts who often contact the user, precision of the matching result can be further improved while memory usage of the terminal device by the feature attribute information can be further reduced.

At step 102, when it is detected that a third-party user requests adding the user as a friend, feature attribute information of the third-party user is acquired.

Herein, when the terminal device detects that a third-party user requests adding the user as a friend, feature attribute information of the third-party user is acquired. The feature attribute information of the third-party user acquired may also include any one of or any combination of name, head portrait picture, phone number, and email address.

At step 103, the feature attribute information of the third-party user is matched with the feature attribute information of each of the contacts in the contact list respectively.

For example, keyword matching, fuzzing matching etc. may be performed for the feature attribute information of the third-party user and the feature attribute information of each of the contacts in the contact list respectively, which is not limited by the present embodiment.

In the present embodiment, similarity matching may be performed for the feature attribute information of the third-party user and the feature attribute information of each of the contacts in the contact list respectively. When the feature attribute information includes any one of name, head portrait picture, phone number, and email address, similarity matching may be performed according to matching rules shown in Table 1.

Table 1

| Feature attribute information | Matching rule |
| --- | --- |
| Name | Perform fuzzy matching for strings of names |
| Head portrait picture | Perform fingerprint string matching for images of head portrait pictures |
| Phone number | Perform full matching for phone numbers |
| Email address | Perform full matching for email addresses |

For example, when performing fuzzy matching for strings of the names, similarity of the names may be obtained by covering similar numbers and letters such as 0 (the number zero) and O (the upper case of letter o), 1 (the number one) and I (the lower case of letter L), and so on. Since a head portrait picture to be uploaded by a contact can be uploaded successfully only after the head portrait picture is cropped according to the size specified by the instant chat software, head portrait pictures of the contacts have the same resolution. Thus, an image fingerprint string of a head portrait picture may be calculated according to a perceptual hash algorithm (PHA). When performing fingerprint string matching for images of the head portrait pictures, matching may be performed for an image fingerprint string of a head portrait picture of the third-party user and an image fingerprint string of a head portrait picture of each of the contacts in the contact list respectively, so as to obtain similarity of the head portrait picture of the third-party user and the head portrait picture of each of the contacts in the contact list. When performing full matching for phone numbers or email addresses, the matching is considered successful only when a phone number or an email address of the third-party user is completely the same as any phone number or email address of any of the contacts in the contact list. For example, if complete matching is obtained, similarity is 100%, otherwise the similarity is 0.

It should be emphasized that performing similarity matching according to the above rules is only for exemplified description, and the present disclosure should not be limited thereto in practical applications. For example, the similarity of the head portrait picture of the third-party user and head portrait picture of each of the contacts in the contact list may also be obtained according to image template matching. Examples will not be enumerated herein.

It should be noted that, if the feature attribute information acquired includes at least two types of feature attribute information, similarity matching may be performed for each type of the feature attribute information of the third-party user and each type of the feature attribute information of each of the contacts in the contact list respectively, so as to obtain similarity with the feature attribute information of the contacts according to similarities of respective types of the feature attribute information. For example, if the feature attribute information acquired includes both name and head portrait picture, similarity matching is performed for the name of third-party user and the name of each of the contacts in the contact list respectively, and similarity matching is performed for the head portrait picture of third-party user and the head portrait picture of each of the contacts in the contact list respectively. Similarity of the third-party user and each of the contacts is obtained based on the similarity obtained by matching the names and the similarity obtained by matching the head portrait pictures. The similarity of the third-party user and each of the contacts may be obtained by averaging the similarity obtained by matching the names and the similarity obtained by matching the head portrait pictures, which is not limited herein.

In the present embodiment, weighting may be performed on the similarities of respective types of feature attribute information, and a sum of weighed similarities is regarded as the similarity with the feature attribute information of the contacts.

In an example, the feature attribute information acquired includes name, head portrait picture, phone number, and email address at the same time. Weights of name, head portrait picture, phone number, and email address are respectively P0, P1, P2, and P3, where P0+P1+P2+P3=1. If similarity of the name of the third-party user and the name of any contact in the contact list is N, similarity of the head portrait picture of the third-party user and the head portrait picture of this contact being P, similarity of the phone number of the third-party user and the phone number of this contact being T, similarity of the email address of the third-party user and the email address of this contact being M, similarity F of the feature attribute information of the third-party user and the feature attribute information of this contact may be obtained by the following formula:

$$F = \sum (P0 * N) + (P1 * P) + (P2 * T) + (P3 * M).$$

At step 104, if a matching result of the feature attribute information of the third-party user and the feature attribute information of any contact in the contact list satisfies a preset condition, first prompt information is added in a request interface received by the user.

The first prompt information is used for prompting the user to verify an identity of the third-party user.

Herein, when similarity matching is performed for the feature attribute information of the third-party user and the feature attribute information of each of the contacts in the contact list respectively, if the similarity of the feature attribute information of the third-party user and the feature attribute information of any contact in the contact list is larger than a predetermined threshold, first prompt information is added in a request interface received by this user. In other words, if the similarity of the feature attribute information of the third-party user and the feature attribute information of any contact in the contact list exceeds a predetermined threshold, it may be considered that the third-party user might be a fraudster who pretends to be this contact. Accordingly, the terminal device adds the first prompt information for prompting the user to verify an identity of the third-party user in a request interface sent, so as to prevent the user from being deceived to some extent. The predetermined threshold may be set as 0.9, 0.8, and so on, which is not limited by the present embodiment.

Preferably, when adding the first prompt information, information for prompting the user as to which specific contact the third-party user is highly similar to may be carried in the first prompt information. For example, information that the third-party user is highly similar to contact A may be carried. In this way, it is convenient for the user to verify the third-party user, and the user may also directly contact with contact A for verification, which can further improve security.

In addition, after the feature attribute information of the contacts in the contact list is acquired, the feature attribute information of the contacts in the contact list may be updated, so that the feature attribute information of the contacts in the contact list is up-to-date, which can improve accuracy of actively predicting the risk of a received friend-adding request. For example, the feature attribute information of the contacts in the contact list may be updated automatically when the terminal device detects that the user updates the contacts. Updating may also be performed according to a time interval preset by the user. For example, updating may be performed every other week. In practical applications, the user may set the updating time according to actual needs, which is not limited by the present embodiment.

Furthermore, it should be noted that, if a matching result of the feature attribute information of the third-party user and the feature attribute information of any contact in the contact list does not satisfy the preset condition, it is considered that it is unlikely that the third-party user pretends to be a contact of this user, and the request interface is sent normally. Since the above series of matching processes run in the background of the terminal device and the request interface is normally sent only when a present condition is not satisfied, a security precaution check is added, and the user experience is not affected.

It can be found easily that the authentication method based on the contact list provided in the present embodiment is applied to a terminal device, and the user rashly recognizing the third-party user as the friend that the third-party user pretends to be can be avoided, so as to improve security and effectively reduce network fraud.

A second embodiment of the present disclosure relates to an authentication method based on a contact list. The second embodiment provides a further improvement over the first embodiment in that before matching the feature attribute information of the third-party user with the feature attribute information of each of the contacts in the contact list respectively, whether an account of the third-party user is in an abnormal state is determined first. If the account of the third-party user is in the abnormal state, it can be determined directly that the account of the third-party user is not safe, and processing is performed according to a preset rule; or if the account of the third-party user is not in the abnormal state, the step of acquiring the feature attribute information of the third-party user is performed. In this way, efficiency of actively predicting the risk of a received friend-adding request can be improved.

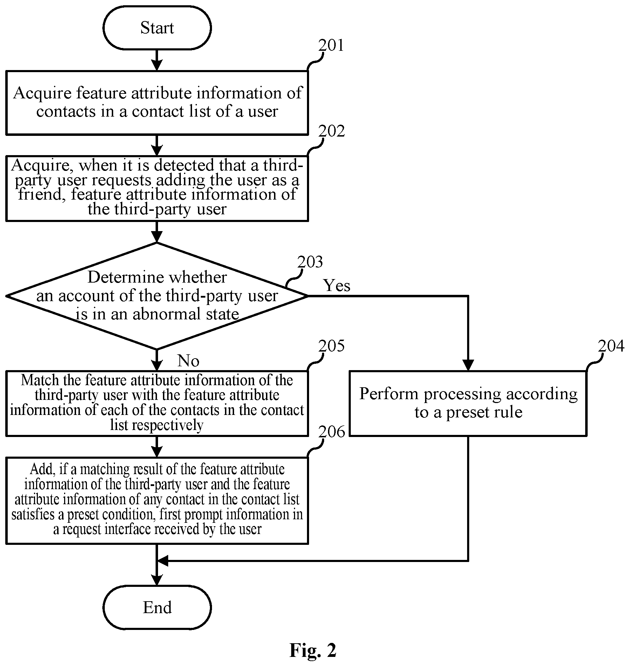

The flowchart of the authentication method based on the contact list in the present embodiment is shown in Fig. 2, and includes the following steps.

At step 201, feature attribute information of contacts in a contact list of a user is acquired.

At step 202, when it is detected that a third-party user requests adding the user as a friend, feature attribute information of the third-party user is acquired.

At step 203, whether an account of the third-party user is in an abnormal state is determined. If the account of the third-party user is in the abnormal state, the method proceeds to step 204; otherwise, the method proceeds to step 205.

For example, the terminal device may acquire relevant account information of the third-party user from a server, and determines whether the account of the third-party user is in an abnormal state. If the terminal device detects that the account of the third-party user is marked as a fake account or a stolen account multiple times within a certain period (for example, the last 24-72 hours), or the account of the third-party user logs in at multiple locations within a certain period, it may be determined that the account of the third-party user is in the abnormal state and the method proceeds to step 204. Otherwise, the method proceeds to step 205 of matching the feature attribute information of the third-party user with the feature attribute information of each of the contacts in the contact list respectively.

At step 204, processing is performed according to a preset rule.

The preset rule for processing in the present embodiment may be adding second prompt information for characterizing abnormality of the account in a request interface received by the user, and may also be prohibiting popping-up of the request interface.

Herein, if the account of the third-party user is in the abnormal state, the terminal device adds second prompt information in a request interface, to inform that the third-party user is in the abnormal state, so that the user may carefully handle a friend-adding request sent by the third-party user. Alternatively, if the third-party user is in the abnormal state, the terminal device directly prohibits popping-up of the request interface for the user. That is, the user does not receive the friend-adding request sent by the third-party user. In this way, disturbing the user can be avoided.

In practical applications, if the terminal device detects that the account of the third-party user is in the abnormal state, a visual mark may also be provided for the third-party user, for example, adding a red exclamation mark prompt on the head portrait picture of the third-party user. Then, the terminal device uploads information in which the third-party user is marked to the server and sends an updating instruction to the server, so that head portrait pictures of the third-party user in friend lists including the third-party user are all updated to be a head portrait picture with the mark, for example, a head portrait picture with a red exclamation mark prompt. Further, a prompt message such as "the account of this user might be stolen, and please beware of fraud" may be added to all dialog windows with the third-party user. In this way, a user who has accepted the friend-adding request of the third-party user can be informed of that the account of the third-party user might be stolen and has risks, so as to warn the user who has accepted the friend-adding request of the third-party user and thereby further reduce network fraud.

Preferably, after processing is performed according to the preset rule, the terminal device may also send a request of identity verification to the third-party user via the server, and acquire relevant information about the identity verification of the third-party user via the server. Only when it is detected that the third-party user passes the identity verification, can the terminal device send an instruction of cancelling the abnormal state of the third-party user, so as to cancel the abnormal state of the third-party user.

At step 205, the feature attribute information of the third-party user is matched with the feature attribute information of each of the contacts in the contact list respectively.

At step 206, if a matching result of the feature attribute information of the third-party user and the feature attribute information of any contact in the contact list satisfies a preset condition, first prompt information is added in a request interface received by the user.

The first prompt information is used for prompting the user to verify an identity of the third-party user.

Step 201 to step 202 and step 205 to step 206 in the present embodiment are substantively similar to step 101 to step 104 in the first embodiment, and aim to acquire the feature attribute information of the contacts in the contact list of the user. When it is detected that a third-party user requests adding a user as a friend, feature attribute information of the third-party user is acquired; the feature attribute information of the third-party user is matched with feature attribute information of each of the contacts in the contact list respectively; if a matching result of the feature attribute information of the third-party user and the feature attribute information of any contact in the contact list satisfies a preset condition, first prompt information for prompting the user to verify an identity of the third-party user is added in a request interface received by the user. Details are not repeated herein.

It can be found easily that the authentication method based on the contact list provided in the present embodiment is applied to a terminal device. Before matching the feature attribute information of the third-party user with the feature attribute information of each of the contacts in the contact list respectively, whether an account of the third-party user is in an abnormal state is determined first. If the account of the third-party user is in the abnormal state, it may be determined directly that the account of the third-party user is not safe, and processing is performed according to a preset rule; or if the account of the third-party user is not in the abnormal state, the step of acquiring the feature attribute information of the third-party user is performed. In this way, efficiency of actively predicting the risk of a received friend-adding request can be improved.

A third embodiment of the present disclosure relates to an authentication method based on a contact list. The third embodiment is substantively similar to the first embodiment, except that the authentication method based on the contact list in the first embodiment is applied to a terminal device, while the authentication method based on the contact list in the present embodiment is applied to a server.

Implementation details of the authentication method based on the contact list will be described below. The following content relates to implementation details provided only for better understanding, and is not essential for implementing the present solution.

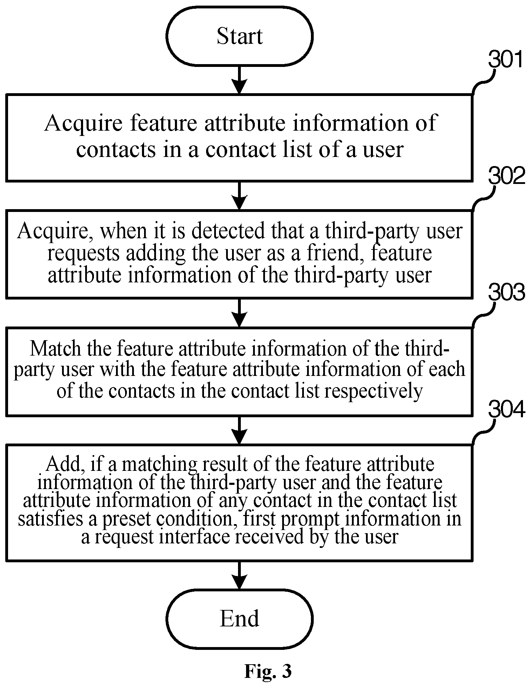

The flowchart of the authentication method based on the contact list is shown in Fig. 3, and includes the following steps.

At step 301, feature attribute information of contacts in a contact list of a user is acquired.

For example, if user A and user B are a contact of each other. A server may acquire feature attribute information of the user B from a contact list of the user A. The server may also acquire feature attribute information of the user A from a contact list of the user B.

The feature attribute information in the present embodiment may include any one of or any combination of name, head portrait picture, phone number, and email address, and may also include region, gender, or the like, which is not limited by the present embodiment. Since these pieces of feature attribute information may be combined in any combination, the problem that determining a fraud account is performed based on a single factor can be solved, and accuracy of predicting the risk can be further improved. Additionally, the feature attribute information of the contacts in the contact list of the user can be acquired and stored when the server detects that the user registers an account of instant chat software or modifies the personal profile.

It is preferred that the feature attribute information of the contacts in the contact list of the user acquired is feature attribute information of all the contacts in the contact list. In this way, precision of a matching result can be improved. However, in practical applications, the user may perform setting via a terminal device, so that the server only serves to acquire feature attribute information of a predetermined number of contacts in the contact list. For example, feature attribute information of 100 contacts in the contact list may be acquired according to the setting.

Preferably, the user may voluntarily select contacts in the contact list for the server to acquire feature attribute information of the contacts selected by the user. Actually, among the contacts in the contact list of the user, the number of contacts who often contact the user is limited. Moreover, if a relatively unfamiliar contact sends a friend-adding request to the user, or if the relatively unfamiliar contact asks the user for money after the user accepts his/her friend-adding request, the user will generally be more alert. In addition, based on statistics, it is found that the fraudster normally pretends to be a relatively close friend of the user to carry out fraudulent activities. Accordingly, through voluntarily selecting contacts who often contact the user in the contact list by the user to enable the server only to acquire feature attribute information of the contacts who often contact the user, precision of the matching result can be further improved.

At step 302, when it is detected that a third-party user requests adding the user as a friend, feature attribute information of the third-party user is acquired.

Herein, when the server detects that a third-party user requests adding the user as a friend, feature attribute information of the third-party user is acquired. The feature attribute information of the third-party user acquired may also include any one of or any combination of name, head portrait picture, phone number, and email address.

At step 303, the feature attribute information of the third-party user is matched with the feature attribute information of each of the contacts in the contact list respectively.

For example, keyword matching, fuzzing matching etc. may be performed for the feature attribute information of the third-party user and the feature attribute information of each of the contacts in the contact list respectively, which is not limited by the present embodiment.

In the present embodiment, similarity matching may be performed for the feature attribute information of the third-party user and the feature attribute information of each of the contacts in the contact list respectively. When the feature attribute information includes any one of name, head portrait picture, phone number, and email address, similarity matching may be performed according to matching rules shown in Table 2.

Table 2

| Feature attribute information | Matching rule |
|---|---|
| Name | Perform fuzzy matching for strings of names |
| Head portrait picture | Perform fingerprint string matching for images of head portrait pictures |

(continued)

| Feature attribute information | Matching rule |
|---|---|
| Phone number | Perform full matching for phone numbers |
| Email address | Perform full matching for email addresses |

For example, when performing fuzzy matching for strings of the names, similarity of the names may be obtained by covering similar numbers and letters such as 0 (the number zero) and O (the upper case of letter o), 1 (the number one) and I (the lower case of letter L), and so on. Since a head portrait picture to be uploaded by a contact can be uploaded successfully only after the head portrait picture is cropped according to the size specified by the instant chat software, head portrait pictures of the contacts have the same resolution. Thus, an image fingerprint string of a head portrait picture may be calculated according to a perceptual hash algorithm (PHA). When performing fingerprint string matching for images of the head portrait pictures, matching may be performed for an image fingerprint string of a head portrait picture of the third-party user and an image fingerprint string of a head portrait picture of each of the contacts in the contact list respectively, so as to obtain similarity of the head portrait picture of the third-party user and the head portrait picture of each of the contacts in the contact list. When performing full matching for phone numbers or email addresses, the matching is considered successful only when a phone number or an email address of the third-party user is completely the same as any phone number or email address of any of the contacts in the contact list. For example, if complete matching is obtained, similarity is 100%, otherwise the similarity is 0.

It should be emphasized that performing similarity matching according to the above rules is only for exemplified description, and the present disclosure should not be limited thereto in practical applications. For example, the similarity of the head portrait picture of the third-party user and head portrait picture of each of the contacts in the contact list may also be obtained according to image template matching. Examples will not be enumerated herein.

It should be noted that, if the feature attribute information acquired includes at least two types of feature attribute information, similarity matching may be performed for each type of the feature attribute information of the third-party user and each type of the feature attribute information of each of the contacts in the contact list respectively, so as to obtain similarity with the feature attribute information of the contacts according to similarities of respective types of the feature attribute information. For example, if the feature attribute information acquired includes both name and head portrait picture, similarity matching is performed for the name of third-party user and the name of each of the contacts in the contact list respectively, and similarity matching is performed for the head portrait picture of third-party user and the head portrait picture of each of the contacts in the contact list respectively. Similarity of the third-party user and each of the contacts is obtained based on the similarity obtained by matching the names and the similarity obtained by matching the head portrait pictures. The similarity of the third-party user and each of the contacts may be obtained by averaging the similarity obtained by matching the names and the similarity obtained by matching the head portrait pictures, which is not limited herein.

In the present embodiment, weighting may be performed on the similarities of respective types of feature attribute information, and a sum of weighed similarities is regarded as the similarity with the feature attribute information of the contacts.

In an example, the feature attribute information acquired includes name, head portrait picture, phone number, and email address at the same time. Weights of name, head portrait picture, phone number, and email address are respectively P0, P1, P2, and P3, where P0+P1+P2+P3=1. If similarity of the name of the third-party user and the name of any contact in the contact list is N, similarity of the head portrait picture of the third-party user and the head portrait picture of this contact being P, similarity of the phone number of the third-party user and the phone number of this contact being T, similarity of the email address of the third-party user and the email address of this contact being M, similarity F of the feature attribute information of the third-party user and the feature attribute information of this contact may be obtained by the following formula:

$$F = \sum(P0 * N) + (P1 * P) + (P2 * T) + (P3 * M).$$

At step 304, if a matching result of the feature attribute information of the third-party user and the feature attribute information of any contact in the contact list satisfies a preset condition, first prompt information is added in a request interface received by the user.

The first prompt information is used for prompting the user to verify an identity of the third-party user.

Herein, when similarity matching is performed for the feature attribute information of the third-party user and the feature attribute information of each of the contacts in the contact list respectively, if the similarity of the feature attribute information of the third-party user and the feature attribute information of any contact in the contact list is larger than a predetermined threshold, first prompt information is added in a request interface received by this user. In other words, if the similarity of the feature attribute information of the third-party user and the feature attribute information of any contact in the

8

contact list exceeds a predetermined threshold, it may be considered that the third-party user might be a fraudster who pretends to be this contact. Accordingly, the server adds the first prompt information for prompting the user to verify an identity of the third-party user in a request interface sent, so as to prevent the user from being deceived to some extent. The predetermined threshold may be set as 0.9, 0.8, and so on, which is not limited by the present embodiment.

Preferably, when adding the first prompt information, information for prompting the user as to which specific contact the third-party user is highly similar to may be carried in the first prompt information. For example, information that the third-party user is highly similar to contact A may be carried. In this way, it is convenient for the user to verify the third-party user, and the user may also directly contact with contact A for verification, which can further improve security.

In addition, after the feature attribute information of the contacts in the contact list is acquired, the feature attribute information of the contacts in the contact list may be updated, so that the feature attribute information of the contacts in the contact list is up-to-date, which can improve accuracy of actively predicting the risk of a received friend-adding request. For example, when receiving an updating request from the terminal device, the server automatically updates the feature attribute information of the contacts in the contact list. Updating may also be performed according to a time interval preset by the user. For example, updating may be performed every other week. In practical applications, the user may set the updating time according to actual needs, which is not limited by the present embodiment.

Furthermore, it should be noted that, if a matching result of the feature attribute information of the third-party user and the feature attribute information of any contact in the contact list does not satisfy the preset condition, it is considered that it is unlikely that the third-party user pretends to be a contact of this user, and the request interface is sent normally. Since the above series of matching processes run in the server and the request interface is normally sent only when a present condition is not satisfied, a security precaution check is added, and the user experience is not affected.

It can be found easily that the authentication method based on the contact list provided in the present embodiment is applied to a server, and the user rashly recognizing the third-party user as the friend that the third-party user pretends to be can be avoided, so as to improve security and effectively reduce network fraud.

A fourth embodiment of the present disclosure relates to an authentication method based on a contact list. The fourth embodiment provides a further improvement over the third embodiment in that before matching the feature attribute information of the third-party user with the feature attribute information of each of the contacts in the contact list respectively, whether an account of the third-party user is in an abnormal state is determined first. If the account of the third-party user is in the abnormal state, it may be determined directly that the account of the third-party user is not safe, and processing is performed according to a preset rule; or if the account of the third-party user is not in the abnormal state, the step of acquiring the feature attribute information of the third-party user is performed. In this way, efficiency of actively predicting the risk of a received friend-adding request can be improved.

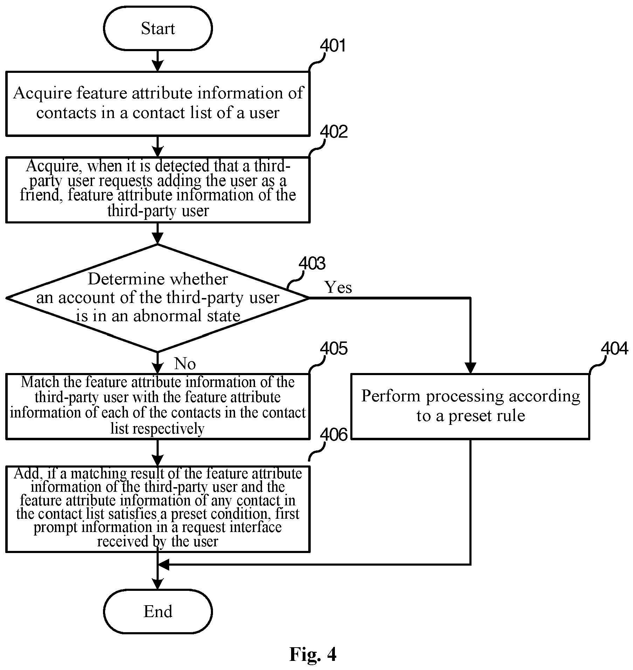

The flowchart of the authentication method based on the contact list in the present embodiment is shown in Fig. 4, and includes the following steps.

At step 401, feature attribute information of contacts in a contact list of a user is acquired.

At step 402, when it is detected that a third-party user requests adding the user as a friend, feature attribute information of the third-party user is acquired.

At step 403, whether an account of the third-party user is in an abnormal state is determined. If the account of the third-party user is in the abnormal state, the method proceeds to step 404; otherwise, the method proceeds to step 405.

For example, the server may acquire relevant account information of the third-party user, and determines whether the account of the third-party user is in an abnormal state. If the server detects that the account of the third-party user is marked as a fake account or a stolen account multiple times within a certain period (for example, the last 24-72 hours), or the account of the third-party user logs in at multiple locations within a certain period, it may be determined that the account of the third-party user is in the abnormal state and the method proceeds to step 404. Otherwise, the method proceeds to step 405 of matching the feature attribute information of the third-party user with the feature attribute information of each of the contacts in the contact list respectively.

At step 404, processing is performed according to a preset rule.

The preset rule for processing in the present embodiment may be adding second prompt information for characterizing abnormality of the account in a request interface received by the user, and may also be prohibiting popping-up of the request interface.

Herein, if the account of the third-party user is in the abnormal state, the server adds second prompt information in a request interface, to inform that the third-party user is in the abnormal state, so that the user may carefully handle a friend-adding request sent by the third-party user. Alternatively, if the third-party user is in the abnormal state, the server directly prohibits sending the request to a terminal device so as to prohibit popping-up of the request interface for the user. That is, the user does not receive the friend-adding request sent by the third-party user. In this way, disturbing the user can be avoided.

In practical applications, if the server detects that the account of the third-party user is in the abnormal state, a visual mark may also be provided for the third-party user, for example, adding a red exclamation mark prompt on the head portrait picture of the third-party user. An updating instruction may be sent, so that head portrait pictures of the third-party user in friend lists including the third-party user are all updated to be a head portrait picture with the mark, for example, a head portrait picture with a red exclamation mark prompt. Further, a prompt message such as "the account of this user might be stolen, and please beware of fraud" may be added to all dialog windows with the third-party user. In this way, a user who has accepted the friend-adding request of the third-party user can be informed of that the account of the third-party user might be stolen and has risks, so as to warn the user who has accepted the friend-adding request of the third-party user and thereby further reduce network fraud.

Preferably, after processing is performed according to the preset rule, the server may also send a request of identity verification to the third-party user, and acquire relevant information about the identity verification of the third-party user. Only when it is detected that the third-party user passes the identity verification, can the server send an instruction of cancelling the abnormal state of the third-party user, so as to cancel the abnormal state of the third-party user.

At step 405, the feature attribute information of the third-party user is matched with the feature attribute information of each of the contacts in the contact list respectively.

At step 406, if a matching result of the feature attribute information of the third-party user and the feature attribute information of any contact in the contact list satisfies a preset condition, first prompt information is added in a request interface received by the user.

The first prompt information is used for prompting the user to verify an identity of the third-party user.

Step 401 to step 402 and step 405 to step 406 in the present embodiment are substantively similar to step 301 to step 304 in the third embodiment, and aim to acquire the feature attribute information of the contacts in the contact list of the user. When it is detected that a third-party user requests adding a user as a friend, feature attribute information of the third-party user is acquired; the feature attribute information of the third-party user is matched with feature attribute information of each of the contacts in the contact list respectively; if a matching result of the feature attribute information of the third-party user and the feature attribute information of any contact in the contact list satisfies a preset condition, first prompt information for prompting the user to verify an identity of the third-party user is added in a request interface received by the user. Details are not repeated herein.

It can be found easily that the authentication method based on the contact list provided in the present embodiment is applied to a server. Before matching the feature attribute information of the third-party user with the feature attribute information of each of the contacts in the contact list respectively, whether an account of the third-party user is in an abnormal state is determined first. If the account of the third-party user is in the abnormal state, it may be determined directly that the account of the third-party user is not safe, and processing is performed according to a preset rule; or if the account of the third-party user is not in the abnormal state, the step of acquiring the feature attribute information of the third-party user is performed. In this way, efficiency of actively predicting the risk of a received friend-adding request can be improved.

The division of steps in the above methods is merely intended for clarity and conciseness. When implemented, some steps can be combined into a single step or a certain step can be further divided into multiple steps, as long as they can establish a corresponding logical relationship within the scope of the disclosure. Various modifications and suitable design changes to the algorithm or process, without changing its core design, can be included within the scope of the disclosure.

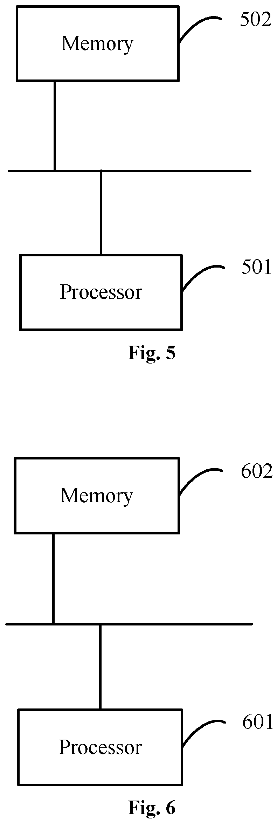

A fifth embodiment of the present disclosure relates to a terminal device, as shown in Fig. 5. The terminal device includes at least one processor 501 and a memory 502 communicatively connected with the at least one processor 501. The memory 502 stores instructions executable by the at least one processor 501, which instructions when executed by the at least one processor 501, cause the at least one processor 501 to implement the authentication method based on the contact list according to the first embodiment or the second embodiment.

The memory 502 and the processor 501 are connected via a bus. The bus may include any number of interconnected buses and bridges, and the bus connects various circuits of one or more processor 501 and the memory 502 together. The bus may also connect various other circuits such as peripherals, voltage regulators, and power management circuits together, which are well known in the art, and therefore will not be described any further herein. A bus interface is provided between the bus and a transceiver. The transceiver may be configured as a single element or multiple elements, for example, multiple receivers and transmitters. The transceiver provides a unit for communication with various other devices over a transmission medium. Data processed by the processor 501 is transmitted via an antenna over a wireless medium, and further the antenna receives data and transmits the data to the processor 501.

The processor 501 is in charge of bus management and general processing, and may also provide various functions, including timing, peripheral interfaces, voltage regulation, power management, and other control functions. The memory 502 may be used to store data used by the processor 501 when performing operations.

A sixth embodiment of the present disclosure relates to a server, as shown in Fig. 6. The server includes at least one processor 601 and a memory 602 communicatively connected with the at least one processor 601. The memory 602 stores instructions that are executable by the at least one processor 601, which instructions, when executed by the at least one processor 601, causing the at least one processor 601 to implement the authentication method based on the contact list according to the third embodiment or the fourth embodiment.

The memory 602 and the processor 601 are connected via a bus. The bus may include any number of interconnected buses and bridges, and the bus connects various circuits of one or more processor 601 and the memory 602 together. The bus may also connect various other circuits such as peripherals, voltage regulators, and power management circuits together, which are well known in the art, and therefore will not be described any further herein. A bus interface is provided between the bus and a transceiver. The transceiver may be configured as a single element or multiple elements, for example, multiple receivers and transmitters. The transceiver provides a unit for communication with various other devices over a transmission medium. Data processed by the processor 601 is transmitted via an antenna over a wireless medium, and further the antenna receives data and transmits the data to the processor 601.

The processor 601 is in charge of bus management and general processing, and may also provide various functions, including timing, peripheral interfaces, voltage regulation, power management, and other control functions. The memory 602 may be used to store data used by the processor 601 when performing operations.

A seventh embodiment of the present disclosure relates to a computer readable storage medium, which stores a computer program. The program, when executed by a processor, implements any one of the aforementioned method embodiments.

It may be understood by those skilled in the art that, all or part of steps in a method of the aforementioned embodiments may be realized by a program instructing related hardware. The program is stored in a storage medium, and includes several instructions for enabling a device (which may be a singlechip, a chip etc.) or a processor to implement all or part of steps in a method of various embodiments in the present application. The above storage medium includes USB disk, external hard disk, read-only memory (ROM), random access memory (RAM), magnetic disk or optical disk, and other media that can store program codes.

An eighth embodiment of the present disclosure relates to a computer program product. The computer program product includes a computer program stored on a non-transient computer readable storage medium. The computer program includes program instructions that, when executed by the computer, cause the computer to implement the aforementioned method described in any of the method embodiments.

**Claims**

1. An authentication method based on a contact list, comprising:

   acquiring feature attribute information of contacts in a contact list of a user;
   acquiring, when it is detected that a third-party user requests adding the user as a friend, feature attribute information of the third-party user;
   matching the feature attribute information of the third-party user with the feature attribute information of each of the contacts in the contact list respectively;
   **characterized by** further comprising: adding first prompt information in a request interface received by the user, if a matching result of the feature attribute information of the third-party user and the feature attribute information of any contact in the contact list satisfies a preset condition, wherein the first prompt information is used for prompting the user to verify an identity of the third-party user; and
   updating the feature attribute information of the contacts in the contact list of the user.

2. The authentication method based on the contact list according to claim 1, wherein matching the feature attribute information of the third-party user with the feature attribute information of each of the contacts in the contact list respectively further comprises:

   performing similarity matching for the feature attribute information of the third-party user and the feature attribute information of each of the contacts in the contact list respectively,
   wherein a matching result of the feature attribute information of the third-party user and feature attribute information of any contact in the contact list satisfies a preset condition, wherein the preset condition is that:
   similarity of the feature attribute information of the third-party user and the feature attribute information of any contact in the contact list is larger than a preset threshold.

3. The authentication method based on the contact list according to claim 2, wherein

   the feature attribute information acquired comprises at least two types of the feature attribute information; and
   performing similarity matching for the feature attribute information of the third-party user and the feature attribute information of each of the contacts in the contact list respectively further comprises:
   performing similarity matching for each type of the feature attribute information of the third-party user and each type of the feature attribute information of each of the contacts in the contact list respectively, so as to obtain similarity with the feature attribute information of the contacts according to similarities of respective types of the feature attribute information.

4. The authentication method based on the contact list according to claim 3, wherein obtaining the similarity with the feature attribute information of the contacts according to similarities of respective types of the feature attribute information further comprises:
performing weighting on the similarities of respective types of feature attribute information, wherein a sum of weighed similarities is regarded as the similarity with the feature attribute information of the contacts.

5. The authentication method based on the contact list according to claim 1, wherein the feature attribute information comprises any one of or any combination of: name, head portrait picture, phone number, and email address.

6. The authentication method based on the contact list according to claim 1, wherein if a matching result of the feature attribute information of the third-party user and the feature attribute information of any contact in the contact list does not satisfy the preset condition, the request interface is sent normally.

7. The authentication method based on the contact list according to any one of claims 1 to 6, wherein before matching the feature attribute information of the third-party user with the feature attribute information of each of the contacts in the contact list respectively, the authentication method based on the contact list further comprises:

determining whether an account of the third-party user is in an abnormal state,
wherein if the account of the third-party user is in the abnormal state, acquiring the feature attribute information of the third-party user is prohibited, and processing is performed directly according to a preset rule; otherwise matching the feature attribute information of the third-party user with the feature attribute information of each of the contacts in the contact list respectively is performed.

8. The authentication method based on the contact list according to claim 7, wherein the preset rule for processing is that:

second prompt information is added in the request interface received by the user, wherein the second prompt information is used for characterizing abnormality of the account; or
popping-up of the request interface is prohibited.

9. The authentication method based on the contact list according to claim 8, further comprising:
providing a visual mark for the third-party user if the account of the third-party user is in the abnormal state.

10. The authentication method based on the contact list according to claim 7, wherein after processing is performed according to the preset rule, the authentication method based on the contact list further comprises:

sending a request of identity verification to the third-party user,
wherein when it is detected that the third-party user passes the identity verification, the abnormal state of the third-party user is cancelled.

11. A terminal device, comprising:

at least one processor; and
a memory communicatively connected with the at least one processor,
wherein the memory stores instructions executable by the at least one processor, which instructions, when executed by the at least one processor, causing the at least one processor to implement the authentication method based on the contact list according to any one of claims 1 to 10.

12. A server, comprising:

at least one processor; and
a memory communicatively connected with the at least one processor,
wherein the memory stores instructions executable by the at least one processor, which instructions, when executed by the at least one processor, causing the at least one processor to implement the authentication method based on the contact list according to any one of claims 1 to 10.

13. A computer readable storage medium storing a computer program that, when executed by a processor, implements the authentication method based on the contact list according to any one of claims 1 to 10.

**Patentansprüche**

1. Verfahren zur Authentifizierung auf der Grundlage einer Kontaktliste, umfassend:

   Erfassen von Merkmalsattributinformationen von Kontakten in einer Kontaktliste eines Benutzers;
   Erfassen von Merkmalsattributinformation eines Drittbenutzers, wenn erkannt wird, dass der Drittbenutzer das Hinzufügen des Benutzers als Freund anfordert;
   Abgleichen der Merkmalsattributinformation des Drittbenutzers mit den Merkmalsattributinformation eines jeden der Kontakte in der Kontaktliste;
   **dadurch gekennzeichnet, dass** es ferner umfasst: Hinzufügen von erster Eingabeaufforderungsinformation in einer vom Benutzer empfangenen Anfrageschnittstelle, wenn ein Abgleichsergebnis der Merkmalsattributinformation des Drittbenutzers und der Merkmalsattributinformation eines beliebigen Kontakts in der Kontaktliste eine voreingestellte Bedingung erfüllt, wobei die erste Eingabeaufforderungsinformation verwendet wird, um den Benutzer aufzufordern, eine Identität des Drittbenutzers zu verifizieren; und
   Aktualisieren der Merkmalsattributinformation der Kontakte in der Kontaktliste des Benutzers.

2. Verfahren zur Authentifizierung auf der Grundlage der Kontaktliste nach Anspruch 1, wobei das Abgleichen der Merkmalsattributinformation des Drittbenutzers mit der Merkmalsattributinformation eines jeden der Kontakte in der Kontaktliste ferner umfasst:

   Durchführen eines Ähnlichkeitsabgleichs für die Merkmalsattributinformation des Drittbenutzers und die Merkmalsattributinformation eines jeden der Kontakte in der Kontaktliste,
   wobei ein Abgleichsergebnis der Merkmalsattributinformation des Drittbenutzers und der Merkmalsattributinformation eines beliebigen Kontakts in der Kontaktliste eine voreingestellte Bedingung erfüllt, wobei die voreingestellte Bedingung lautet, dass:
   die Ähnlichkeit der Merkmalsattributinformation des Drittbenutzers und der Merkmalsattributinformation eines beliebigen Kontakts in der Kontaktliste größer ist als ein voreingestellter Schwellenwert.

3. Verfahren zur Authentifizierung auf der Grundlage der Kontaktliste nach Anspruch 2, bei dem

   die erfasste Merkmalsattributinformation mindestens zwei Typen von Merkmalsattributinformation umfasst; und
   das Durchführen eines Ähnlichkeitsvergleichs für die Merkmalsattributinformation des Drittbenutzers und die Merkmalsattributinformation eines jeden der Kontakte in der Kontaktliste ferner umfasst:
   Durchführen eines Ähnlichkeitsabgleichs für jeden Typ der Merkmalsattributinformation des Drittbenutzers und jeden Typ der Merkmalsattributinformation jedes der Kontakte in der Kontaktliste, um eine Ähnlichkeit mit der Merkmalsattributinformation der Kontakte entsprechend den Ähnlichkeiten der jeweiligen Typen der Merkmalsattributinformation zu erhalten.

4. Verfahren zur Authentifizierung auf der Grundlage der Kontaktliste nach Anspruch 3, wobei das Erhalten der Ähnlichkeit mit der Merkmalsattributinformation der Kontakte entsprechend den Ähnlichkeiten der jeweiligen Typen der Merkmalsattributinformation ferner umfasst:
   Durchführen einer Gewichtung der Ähnlichkeiten der jeweiligen Typen der Merkmalsattributinformation, wobei eine Summe der gewichteten Ähnlichkeiten als die Ähnlichkeit mit der Merkmalsattributinformation der Kontakte angesehen wird.

5. Verfahren zur Authentifizierung auf der Grundlage der Kontaktliste nach Anspruch 1, bei dem die Merkmalsattributinformation eines von Name, Porträtfoto, Telefonnummer und E-Mail-Adresse oder eine beliebige Kombination daraus umfasst.

6. Verfahren zur Authentifizierung auf der Grundlage der Kontaktliste nach Anspruch 1, bei dem die Anfrageschnittstelle normal gesendet wird, wenn ein Abgleichsergebnis der Merkmalsattributinformation des Drittbenutzers und der Merkmalsattributinformation eines beliebigen Kontakts in der Kontaktliste die voreingestellte Bedingung nicht erfüllt.

7. Verfahren zur Authentifizierung auf der Grundlage der Kontaktliste nach einem der Ansprüche 1 bis 6, wobei das Verfahren zur Authentifizierung auf der Grundlage der Kontaktliste vor dem Abgleichen der Merkmalsattributinformation des Drittbenutzers mit der Merkmalsattributinformation jedes der Kontakte in der Kontaktliste ferner umfasst:

Bestimmen, ob sich ein Konto des Drittbenutzers in einem anormalen Zustand befindet, wobei, wenn sich das Konto des Drittbenutzers in dem anormalen Zustand befindet, das Erfassen der Merkmalsattributinformation des Drittbenutzers verboten ist und die Verarbeitung direkt gemäß einer voreingestellten Regel durchgeführt wird; andernfalls das Abgleichen der Merkmalsattributinformation des Drittbenutzers mit der Merkmalsattributinformation jedes der Kontakte in der Kontaktliste durchgeführt wird.

8. Verfahren zur Authentifizierung auf der Grundlage der Kontaktliste nach Anspruch 7, wobei die voreingestellte Regel für die Verarbeitung lautet:

In der vom Benutzer empfangenen Anfrageschnittstelle wird zweite Eingabeaufforderungsinformation hinzugefügt, wobei die zweite Eingabeaufforderungsinformation zur Charakterisierung von Anomalien des Kontos verwendet wird oder
das Auftauchen der Anfrageschnittstelle wird verhindert.

9. Verfahren zur Authentifizierung auf der Grundlage der Kontaktliste nach Anspruch 8, ferner umfassend:
Bereitstellen einer visuellen Markierung für den Drittbenutzer, wenn sich das Konto des Drittbenutzers im anormalen Zustand befindet.

10. Verfahren zur Authentifizierung auf der Grundlage der Kontaktliste nach Anspruch 7, wobei das Verfahren zur Authentifizierung auf der Grundlage der Kontaktliste nach der Verarbeitung gemäß der voreingestellten Regel ferner umfasst:
Senden einer Anforderung zur Identitätsüberprüfung an den Drittbenutzer, wobei, wenn festgestellt wird, dass der Drittbenutzer die Identitätsüberprüfung besteht, der anormale Zustand des Drittbenutzers aufgehoben wird.

11. Endgerät, umfassend:

mindestens einen Prozessor; und
einen Speicher, der kommunikativ mit dem mindestens einen Prozessor verbunden ist,
wobei der Speicher Anweisungen speichert, die von dem mindestens einen Prozessor ausführbar sind, die, wenn sie von dem mindestens einen Prozessor ausgeführt werden, den mindestens einen Prozessor veranlassen, das Verfahren zur Authentifizierung auf der Grundlage der Kontaktliste nach einem der Ansprüche 1 bis 10 zu implementieren.

12. Server, umfassend:

mindestens einen Prozessor; und
einen Speicher, der kommunikativ mit dem mindestens einen Prozessor verbunden ist,
wobei der Speicher Anweisungen speichert, die von dem mindestens einen Prozessor ausführbar sind, die, wenn sie von dem mindestens einen Prozessor ausgeführt werden, den mindestens einen Prozessor veranlassen, das Verfahren zur Authentifizierung auf der Grundlage der Kontaktliste nach einem der Ansprüche 1 bis 10 zu implementieren.

13. Computerlesbares Speichermedium, das ein Computerprogramm speichert, das, wenn es von einem Prozessor ausgeführt wird, das Authentifizierungsverfahren auf der Grundlage der Kontaktliste nach einem der Ansprüche 1 bis 10 implementiert.

**Revendications**

1. Procédé d'authentification basé sur une liste de contacts, comprenant :

l'acquisition d'informations d'attribut de caractéristique de contacts dans une liste de contacts d'un utilisateur ;
l'acquisition, lorsqu'il est détecté qu'un utilisateur tiers demande l'ajout de l'utilisateur en tant qu'ami, d'informations d'attribut de caractéristique de l'utilisateur tiers ;

la mise en correspondance des informations d'attribut de caractéristique de l'utilisateur tiers avec les informations d'attribut de caractéristique de chacun des contacts dans la liste de contacts respectivement ;

**caractérisé en ce qu'**il comprend en outre : l'ajout de premières informations d'invite dans une interface de demande reçue par l'utilisateur, si un résultat de mise en correspondance des informations d'attribut de caractéristique de l'utilisateur tiers et des informations d'attribut de caractéristique d'un contact quelconque de la liste de contacts satisfait à une condition prédéfinie, dans lequel les premières informations d'invite sont utilisées pour inviter l'utilisateur à vérifier une identité de l'utilisateur tiers ; et

la mise à jour des informations d'attribut de caractéristique des contacts dans la liste de contacts de l'utilisateur.

2. Procédé d'authentification basé sur la liste de contacts selon la revendication 1, dans lequel la mise en correspondance des informations d'attribut de caractéristique de l'utilisateur tiers avec les informations d'attribut de caractéristique de chacun des contacts dans la liste de contacts comprend en outre respectivement :

la réalisation d'une mise en correspondance de similarité pour les informations d'attribut de caractéristique de l'utilisateur tiers et les informations d'attribut de caractéristique de chacun des contacts dans la liste de contacts, respectivement,

dans lequel un résultat de mise en correspondance des informations d'attribut de caractéristique de l'utilisateur tiers et des informations d'attribut de caractéristique d'un contact quelconque dans la liste de contacts satisfait à une condition prédéfinie, dans lequel la condition prédéfinie est que :

la similarité des informations d'attribut de caractéristique de l'utilisateur tiers et des informations d'attribut de caractéristique d'un contact quelconque dans la liste de contacts est supérieure à un seuil prédéfini.

3. Procédé d'authentification basé sur la liste de contacts selon la revendication 2, dans lequel les informations d'attribut de caractéristique acquises comprennent au moins deux types des informations d'attribut de caractéristique ; et

la réalisation de la mise en correspondance de similarité pour les informations d'attribut de caractéristique de l'utilisateur tiers et les informations d'attribut de caractéristique de chacun des contacts dans la liste de contacts comprend en outre respectivement :

la réalisation d'une mise en correspondance de similarité pour chaque type des informations d'attribut de caractéristique de l'utilisateur tiers et chaque type des informations d'attribut de caractéristique de chacun des contacts dans la liste de contacts, respectivement, de manière à obtenir une similarité avec les informations d'attribut de caractéristique des contacts selon des similarités de types respectifs des informations d'attribut de caractéristique.

4. Procédé d'authentification basé sur la liste de contacts selon la revendication 3, dans lequel l'obtention de la similarité avec les informations d'attribut de caractéristique des contacts selon les similarités de types respectifs des informations d'attribut de caractéristique comprend en outre :

la réalisation d'une pondération sur les similarités de types respectifs d'informations d'attribut de caractéristique, dans lequel une somme de similarités pondérées est considérée comme la similarité avec les informations d'attribut de caractéristique des contacts.

5. Procédé d'authentification basé sur la liste de contacts selon la revendication 1, dans lequel les informations d'attribut de caractéristique comprennent l'un quelconque ou une combinaison quelconque des éléments suivants : nom, photographie du visage, numéro de téléphone et adresse électronique.

6. Procédé d'authentification basé sur la liste de contacts selon la revendication 1, dans lequel si un résultat de mise en correspondance des informations d'attribut de caractéristique de l'utilisateur tiers et des informations d'attribut de caractéristique d'un contact quelconque de la liste de contacts ne satisfait pas à la condition prédéfinie, l'interface de demande est envoyée normalement.

7. Procédé d'authentification basé sur la liste de contacts selon l'une quelconque des revendications 1 à 6, dans lequel, avant de mettre en correspondance les informations d'attribut de caractéristique de l'utilisateur tiers avec les informations d'attribut de caractéristique de chacun des contacts dans la liste de contacts respectivement, le procédé d'authentification basé sur la liste de contacts comprend en outre :

le fait de déterminer si un compte de l'utilisateur tiers est dans un état anormal,

dans lequel, si le compte de l'utilisateur tiers est dans l'état anormal, l'acquisition des informations d'attribut de caractéristique de l'utilisateur tiers est interdite, et un traitement est réalisé directement selon une règle prédéfinie ; sinon, la mise en correspondance des informations d'attribut de caractéristique de l'utilisateur tiers avec les informations d'attribut de caractéristique de chacun des contacts dans la liste de contacts est réalisée respectivement.

8. Procédé d'authentification basé sur la liste de contacts selon la revendication 7, dans lequel la règle prédéfinie pour le traitement est que :

de deuxièmes informations d'invite sont ajoutées dans l'interface de demande reçue par l'utilisateur, dans laquelle les deuxièmes informations d'invite sont utilisées pour caractériser l'anomalie du compte ; ou l'apparition de l'interface de demande est interdite.

9. Procédé d'authentification basé sur la liste de contacts selon la revendication 8, comprenant en outre : la fourniture d'un repère visuel à l'utilisateur tiers si le compte de l'utilisateur tiers est dans un état anormal.

10. Procédé d'authentification basé sur la liste de contacts selon la revendication 7, dans lequel, après la réalisation du traitement selon la règle prédéfinie, le procédé d'authentification basé sur la liste de contacts comprend en outre :

l'envoi d'une demande de vérification d'identité à l'utilisateur tiers, dans lequel, lorsqu'il est détecté que l'utilisateur tiers réussit la vérification d'identité, l'état anormal de l'utilisateur tiers est annulé.

11. Dispositif terminal, comprenant :

au moins un processeur ; et une mémoire connectée en communication à l'au moins un processeur, dans lequel la mémoire stocke des instructions exécutables par l'au moins un processeur, lesquelles instructions, lorsqu'elles sont exécutées par l'au moins un processeur, amènent l'au moins un processeur à mettre en œuvre le procédé d'authentification basé sur la liste de contacts selon l'une quelconque des revendications 1 à 10.

12. Serveur, comprenant :

au moins un processeur ; et une mémoire connectée en communication à l'au moins un processeur, dans lequel la mémoire stocke des instructions exécutables par l'au moins un processeur, lesquelles instructions, lorsqu'elles sont exécutées par l'au moins un processeur, amènent l'au moins un processeur à mettre en œuvre le procédé d'authentification basé sur la liste de contacts selon l'une quelconque des revendications 1 à 10.

13. Support de stockage lisible par ordinateur stockant un programme informatique qui, lorsqu'il est exécuté par un processeur, met en œuvre le procédé d'authentification basé sur la liste de contacts selon l'une quelconque des revendications 1 à 10.

Fig. 1

Start

201

Acquire feature attribute information of contacts in a contact list of a user

202

Acquire, when it is detected that a third-party user requests adding the user as a friend, feature attribute information of the third-party user

203

Determine whether an account of the third-party user is in an abnormal state

Yes

No

205

Match the feature attribute information of the third-party user with the feature attribute information of each of the contacts in the contact list respectively

204

Perform processing according to a preset rule

206

Add, if a matching result of the feature attribute information of the third-party user and the feature attribute information of any contact in the contact list satisfies a preset condition, first prompt information in a request interface received by the user

End

**Fig. 2**

Start

Acquire feature attribute information of
contacts in a contact list of a user

301

Acquire, when it is detected that a third-party user
requests adding the user as a friend, feature
attribute information of the third-party user

302

Match the feature attribute information of the third-
party user with the feature attribute information of each
of the contacts in the contact list respectively

303

Add, if a matching result of the feature attribute
information of the third-party user and the feature
attribute information of any contact in the contact list
satisfies a preset condition, first prompt information in
a request interface received by the user

304

End

Fig. 3

**Fig. 4**

Memory — 502

Processor — 501

**Fig. 5**

Memory — 602

Processor — 601

**Fig. 6**

**EP 3 893 454 B1**

**REFERENCES CITED IN THE DESCRIPTION**

**Patent documents cited in the description**

- CN 107294902

- CN 104636453